# EUROPÄISCHE PATENTSCHRIFT

(11) **EP 0 597 075 B1**
(45) Veröffentlichungstag und Bekanntmachung des Hinweises auf die Patenterteilung: **01.04.1998**
(21) Anmeldenummer: 93912789.0
(22) Anmeldetag: 25.05.1993
(51) Int. Cl.: D04H 13/00

(54) **VERFAHREN ZUR HERSTELLUNG EINES GENADELTEN TEPPICHS UND GENADELTER TEPPICH**
PROCESS FOR PRODUCING A NEEDLED CARPET AND NEEDLED CARPET
PROCEDE DE FABRICATION D'UN TAPIS AIGUILLETE ET TAPIS AIGUILLETE

(30) Priorität: 26.05.1992 DE 4217439; 26.05.1992 DE 4217440; 26.05.1992 DE 4217442
(43) Veröffentlichungstag der Anmeldung: 18.05.1994
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.
(86) Internationale Anmeldenummer: EP9301315
(87) Internationale Veröffentlichungsnummer: WO9324696

(56) Entgegenhaltungen:
- EP-A- 0 086 996
- EP-A- 0 388 072
- DE-A- 1 435 762
- FR-A- 2 198 836
- US-A- 3 952 126
- US-A- 4 062 993

## Beschreibung

Die Erfindung betrifft ein Verfahren zur Herstellung eines genadelten Teppichs gemäß dem Oberbegriff des Anspruches 1 und einen genadelten Teppich.

Bekannte genadelte Teppiche weisen einen Träger aus Folie oder aus einem Bändchengewebe auf. Auf diesem Träger ist eine Zwischenschicht aus Fasern angeordnet, die von einer Teppichoberschicht aus den später sichtbaren, besseren Fasern bedeckt ist. Diese drei Schichten sind miteinander vernadelt, wobei insbesondere Fasern aus der Teppichoberschicht in die Zwischenschicht und den Träger hineingenadelt vorliegen.

Durch die Unter- oder Zwischenschicht soll der Teppich zum einen dicker werden und zum anderen dient die Zwischenschicht dazu, die aus der Teppichoberschicht vernadelten Fasern besser zu halten. Dazu ist diese Zwischenschicht in der Regel 2 -3 mm dick. Wenngleich für die Zwischenschicht billigere Fasern verwendet werden, so fallen für diese Fasern bei deren Verarbeitung doch erhebliche Kosten an.

Die in der Zwischenschicht gehaltenen Fasern werden nach dem Vernadeln dadurch ausreichend fest eingebunden, daß der Teppich mit einem Bindemittel, wie einem Latex, getränkt oder zumindest von unten her bis zur Oberkante der Zwischenschicht gepflatscht wird. Dadurch werden die Oberschichtfasern im Teppich so verstärkt, daß sie fest verankert sind und sich beim Gebrauch des Teppichs nicht herausziehen lassen. Der Trocknungsprozeß eines in diesem Verfahren hergestellten Teppichs ist aufwendig an Energie und Zeit. Auch müssen große Maschinen dazu verwendet und der Prozeß genau beaufsichtigt werden. Das Einbringen und Vernetzen des Latex in den Teppich verursacht so einen großen und damit teuren Produktionsaufwand, wobei insbesondere Abwasser- und Abluftprobleme auftreten. Auch sind diese Teppiche mit dem Nachteil behaftet, daß Alt-Teppiche nur schwierig zu entsorgen sind, da sich die Latexbestandteile von den anderen Bestandteilen des Teppichs nur sehr schlecht trennen lassen und daß Elastomere im Gesamtrohstoffanteil zwangsläufig meist uneinheitlich sind.

Es wurde vielfach versucht, die Eigenschaften der Nadelfilzteppiche zu verbessern, bzw. zu optimieren. So ist es aus der AT-C-305 942 bekannt, zwischen die Ober- und Unterschicht eine thermoplastische Kunststoffolie einzulegen, die mit der Ober- und der Unterschicht durch Nadelung verbunden ist, und anschließend durch eine ausschäumbare PVC-Paste derart umgeben, daß sie darin verschwindet.

Aus der DEZ Chemiefaser 2/69, S. 103 - 106 ist der Einsatz von mit Nadelfilzen verarbeiteten Polyethylenfolien bekannt. Diese Folien werden eingesetzt, um das Dehnungsverhalten der damit hergestellten Teppiche zu verbessern.

In dem aus der DE-A-2 219 817 bekannten Teppich werden Polypropylenstreifen als Bändchengewebe eingesetzt.

Mit keinem der in den genannten Schriften offenbarten Teppiche wurden jedoch die eingangs erwähnten Nachteile des komplizierten, teuren und umweltbelastenden Herstellungsprozesses beseitigt.

Der Erfindung liegt die Aufgabe zugrunde, das Verfahren, nach dem ein genadelter Teppich hergestellt wird, so auszugestalten, daß kein Latex mehr verwendet werden muß und die Produktionszeit gegenüber den bekannten Verfahren wesentlich verkürzt ist.

Diese Aufgabe ist durch das im Anspruch 1 gekennzeichnete Verfahren gelöst. Ein erfindungsgemäßer genadelter Teppich ist in den Ansprüchen 10 bis 13 angegeben.

Erfindungsgemäß wird als Zwischenschicht stückiges, räumlich ausgebildetes thermoplastisches Kunststoff-Folienmaterial verwendet und die vernadelten Fasern werden mindestens durch Temperatureinfluß in der Zwischenschicht fest eingebunden.

Das verwendete Kunststoff-Folienmaterial ist dergestalt "volumenvergrößert", daß dreidimensionales Material vorliegt. Dabei kann es sich um Stücke mit "Volumenvergrößerung" ähnlich Näpfchen- oder Noppenfolien handeln, bei denen aus der Ebene hervorstehende Erhebungen vorhanden sind oder um Folienstreifen oder Folienstücke mit einem insbesondere durch Wendeln, Kringeln, Prägen und dgl. erhöhtem Volumen. Diese sind besonders leicht zu handhaben; sie können während des Herstellungsprozesses zu einheitlichen Schichten durch Abwerfen aus einer Austragsvorrichtung aufgeschichtet werden. Liegen eine Anzahl solcher Folienteile, Folienstreifen oder Folienstücke unvernadelt übereinander, so nehmen diese zusammen ein sehr großes Volumen ein, welches einem Vielfachen des Volumens des verwendeten glatten bzw. ebenen Kunststoff-Folienmaterials gleicher Masse entspricht. Auch nach dem Vernadeln und Heißverfestigen dieses räumlich ausgebildeten, mehrlagigen Kunststoff-Folienmaterials ist die Zwischenschicht eines solchen Teppichs, auch durch die Faserablenkung in der Zwischenschicht viel dämpfender, als wenn nur mehrere ebene bzw. glatte Folien verwendet werden. Durch die lockere Aufschichtung der Folien ist ein leichteres Einnadeln möglich.

Bereits beim Vernadelungsvorgang wird die Zwischenschicht des Teppichs durch Erweichung und teilweises Schmelzen der KunststoffFolien aufgrund der erhöhten Temperatur verdichtet, wodurch eine feste Einbindung der Fasern erfolgt. Ferner wird der herzustellende Teppich bereits während des Vernadelungsprozesses einer Drukkeinwirkung ausgesetzt, wobei die Höhe des Druckes von den Verfahrensparametern bzw. der eingesetzten Vernadelungsanlage abhängt. Dadurch erfolgt eine weitere Verdichtung und Verfestigung der Zwischenschicht und somit die feste Einbindung der Fasern in der Zwischenschicht.

Es ist vorteilhaft, wenn ein derart vernadelter Teppich unter mindestens teilweiser Erweichung bzw. Aufschmelzen des stückigen Kunststoff-Folienmaterials erwärmt und zwischen mindestens zwei Walzen gepreßt wird. Dabei werden insbesondere die in die Zwischenschicht hinein bzw. hindurch vernadelten Fasern aus ihrer senkrechten Durchnadelungsrichtung ausgelenkt und zwischen etwas größere Flächen übereinander liegender Lagen des Kunststoff-Folienmaterials gedrückt. Es werden nicht nur einzelne Lagen der Folien miteinander, sondern auch die genadelten Fasern mit dem Kunststoff-Folienmaterial fest verklebt. Dadurch werden die Fasern durch die Zwischenschicht so festgehalten, daß eine Fixierung mit Latex oder dgl. nicht mehr notwendig ist. Die durch das Walzen evtl. zusammengedrückten Fasern der Oberschicht können anschließend durch z.B. Aufbürsten oder Aufdampfen wieder aufgerichtet werden.

Insbesondere bei Verwendung von Polypropylenfasern und Polyolefinfolien erfolgt eine gute Flächenbindung zwischen den Fasern und den Kunststoffolien. Geeignet sind aber auch Polyamid- oder Polyesterfasern und ein diese Fasern gut anklebendes Kunststoff-Folienmaterial. Wesentlich ist, daß der Schmelzpunkt der Fasern der Oberschicht über dem Schmelzpunkt des Kunststoff-Folienmaterials liegt, damit beim Erwärmen und Pressen des Teppichs nur die Folie anschmilzt oder anklebt und ggf. zusammenbackt. Dies ist z.B. der Fall bei Polypropylenfasern mit einem Schmelzpunkt um 170° C und Hochdruckpolyethylen-Folien mit einem Schmelzpunkt um 110°C.

Die Fasern der Deckschicht können auch in Kugelform als sog. Faserkugeln vorliegen, aus denen die einzelnen Fasern für den Vernadelungsprozeß gezogen werden. Zum Beispiel kann auf einem Träger aus Polypropylenbändchen eine Folienzwischenschicht mit 800 g pro Quadratmeter und eine Faserkugelschicht mit 300 g pro Quadratmeter aufgelegt werden, woraufhin die beiden Schichten mit dem Träger vernadelt und anschließend durch Wärme- und Druckeinfluß verfestigt werden. Bei einer aus Faserkugeln bestehenden Schicht ist eine geringere Anzahl der Fasern in die Folien- und Trägerschicht eingenadelt als bei einer Oberschicht, welche z.B. zur Herstellung eines Nadelfilz-Teppichs dient; die Kugeln weisen eine garnartige Verschlingung auf, wobei nicht alle Fasern der Kugel wie beim Nadelfilz in die Folienschicht eingenadelt werden müssen, sondern nur diejenigen, die zur Befestigung der Kugel dienen. Trotzdem liegt durch die Verwendung einer Folienschicht eine hervorragende Einbindung der Oberflächenschicht / Faserkugeln vor.

Da unebenes Kunststoff-Folienmaterial verwendet wird, ist es gemäß einer speziellen Ausführungsform der Erfindung möglich, als Kunststoff-Folienmaterial für die Zwischenschicht - zumindest im wesentlichen - Abfall-Folienmaterial zu verwenden. Kunststoffabfall-Folienmaterial liegt inzwischen in so großen Mengen vor, daß dessen Entsorgung große Schwierigkeiten bereitet. Durch das erfindungsgemäße Verfahren kann somit auch die Entsorgung von Kunststoff-Abfallfolien verbessert werden.

Ein solcher, nur aus bestimmten Kunststoffen bestehender genadelter Teppich kann später, wenn er nach längerer Zeit nicht mehr benutzt werden soll, weitaus einfacher wiederaufbereitet werden, als ein mit Latex beschichteter, genadelter Teppich. Außerdem sind solche Teppiche für Pilze und Mikroben wenig anfällig, da sie völlig synthetisch sind.

Ein nach dem erfindungsgemäßen Verfahren hergestellter genadelter Teppich wird in den Ansprüchen 10 bis 13 beschrieben. Besonders gute Ergebnisse im Hinblick auf die Gebrauchseigenschaften, insbesondere Schalldämmung und Isolierwirkung konnten durch Beimischung von bereits verarbeitetem Bodenbelagsmaterial in die Zwischenschicht erreicht werden. Das den Folienstücken zugegebene Material in einer Menge von ca. 30 - 50% wurde mit dem Zwischenschichtmaterial vernadelt. Das zerkleinerte Bodenbelagsmaterial weist eine solche Stückegröße auf, daß es noch gut durch die Folienstücke und zwischen den Folienstücken eingebunden wurde.

Weitere Einzelheiten und Vorteile ergeben sich aus den Unteransprüchen und aus anhand der Zeichnungen beschriebenen Ausführungsbeispielen.

Es zeigen:
- Fig. 1: eine schematische Darstellung einer Anlage zur Herstellung des erfindungsgemäßen genadelten Teppichs;
- Fig. 2: eine schematische Darstellung eines vernadelten Teppichs, und
- Fig. 3: eine schematische Darstellung des vernadelten Teppichs der Figur 2 nach dem Walzvorgang.

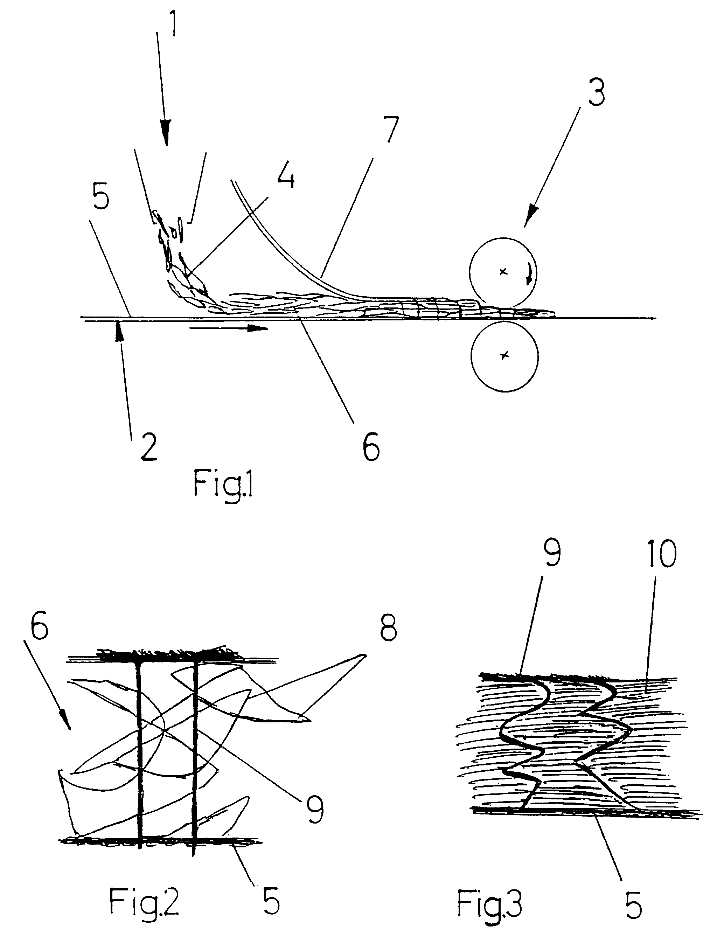

Eine Anlage zur Herstellug des erfindungsgemäßen genadelten Teppichs weist eine Austragsvorrichtung 1, eine Fördervorrichtung 2 und eine Walzvorrichtung 3 auf. Die von der Austragsvorrichtung 1 abgegebenen Folienstücke oder Folienstreifen 4 werden auf einem Träger 5 abgelegt und in mindestens einer Lage aufgeschichtet. Eine so entstandene Zwischenschicht 6 wird durch eine Oberschicht 7, welche aus einem aktive Vernadelungsfasern enthaltendem Material besteht, abgedeckt. Dieses Material können Teppichfasern oder Teppichkugeln sein. Die Zwischenschicht 6 wird anschließend mit der Oberschicht 7 entnommenen Fasern 9 mit dem Träger 5 vernadelt. Eine schematische Darstellung der vernadelten Zwischenschicht 6 ist der Figur 2 entnehmbar. Die Zwischenschicht 6 bildenden, räumlich ausgebildeten Folienstücke 8 bilden ein lockeres Gebilde, welches die Nadeln mit den Fasern 9 der Oberschicht 7 besonders gut durchdringen können. Die senkrechte Durchnadelungsrichtung und der Verlauf der Fasern 9 ist aus der Figur 2 ersichtlich. Der so vernadelte Teppich durchläuft anschließend vorteilhafterweise die Walzvorrichtung 3, in der er durch Temperatureinwirkung, vorzugsweise von der Trägerseite erwärmt wird. Dadurch erweichen die Folien 8 der Zwischenschicht 6 und neigen zum Zusammenbacken. Dieser Effekt wird zusätzlich durch die Druckeinwirkung der Walzenvorrichtung 3 unterstützt, d.h. die Folien 8 werden durch den Walzprozeß dahingehend verdichtet, daß ein kompaktes Gebilde 10 in der Zwischenschicht 6 geschaffen wird, in dem in einem im wesentlichen einheitlichen Kunststoff-Folienmaterial 10 die Fasern 9 fest verankert sind, so daß sie praktisch aus dem fertigen Teppich nicht mehr herausziehbar sind.

Ein Beispiel soll die Materialzusammensetzung eines so hergestellten Teppichs näher erläutern: Es werden Abfallfolien einer Dicke von 20 µm bis 50 µm in Stücken von etwa 15 mm x 40 mm übereinandergelegt, so daß eine Folienstückeschicht von etwa 1000 g/m² entsteht. Dabei wird eine Folienschichtdicke von etwa 15 bis 35 mm gebildet. Diese Zwischenschicht kann auch aus Folien unterschiedlicher Größe bestehen; nach genügender Durchmischung entsteht eine etwa gleichmäßige Verteilung der verschiedenen Folienstücke untereinander.

Die nach den erfindungsgemäßen Verfahren hergestellten genadelten Teppiche sind besonders gut schalldämmend, sehr pflegeleicht und haltbar. Sie können auch naß behandelt werden. Außerdem sind diese Teppiche, aufgrund der besonders guten Faserbindung schnittfest und nicht auslaufend.

## Patentansprüche

1. Verfahren zur Herstellung eines genadelten Teppichs, bei dem zwischen einer Trägerschicht (5) und einer nadelfähige Fasern (9) aufweisenden Oberschicht (7) eine thermoplastisches Kunststoff-Folienmaterial (8) enthaltende Zwischenschicht (6) angeordnet wird, woraufhin die drei Schichten (5, 6, 7) miteinander mittels eines Nadelungsprozesses durch der Oberschicht (7) entnommene Fasern (9) zu einem Teppich verbunden werden, dadurch gekennzeichnet, daß als Zwischenschicht (6) stückiges, räumlich ausgebildetes Kunststoff-Folienmaterial (8) verwendet wird und die vernadelten Fasern mindestens durch Temperatureinfluß in der Zwischenschicht (6) fest eingebunden werden.

2. Verfahren nach Anspruch 1, dadurch gekennzeichnet, daß die Zwischenschicht (6) durch zusätzlichen Druckeinfluß verdichtet wird.

3. Verfahren nach Anspruch 2, dadurch gekennzeichnet, daß der Teppich unter mindestens teilweiser Erweichung des stückigen Kunststoff-Folienmaterials (8) erwärmt und zwischen zwei Walzen (3) gepreßt wird.

4. Verfahren nach einem der Ansprüche 1 bis 3, dadurch gekennzeichnet, daß das verwendete stückige, räumlich ausgebildete unvernadelte Kunststoff-Folienmaterial (8) ein Schüttvolumen aufweist, welches mindestens zweimal, maximal zehnmal so groß ist, wie das Volumen eines ebenen Kunststoff-Folienmaterials gleicher Masse.

5. Verfahren nach Anspruch 4, dadurch gekennzeichnet, daß als räumlich ausgebildetes Kunststoff-Folienmaterial (8) Folienstücke mit Erhebungen, wie Näpfchen, Noppen, Tiefziehpartien oder durch Recken an einer Vielzahl von Teilbereichen, insbesondere kleinen Teilbereichen angebrachten Erhebungen verwendet werden.

6. Verfahren nach einem der Ansprüche 1 - 5, dadurch gekennzeichnet, daß das stückige Kunststoff-Folienmaterial (8) aus Abfallfolien stammt.

7. Verfahren nach einem der Ansprüche 1 - 6, dadurch gekennzeichnet, daß als Zwischenschicht (6) mehrere Lagen des stückigen Kunststoff-Folienmaterials (8) abgelegt werden.

8. Verfahren nach Anspruch 7, dadurch gekennzeichnet, daß dem als Zwischenschicht (6) eingesetzten stückigen Kunststoff-Folienmaterial (8) andere Stoffe beigemischt werden.

9. Verfahren nach Anspruch 8, dadurch gekennzeichnet, daß auf dem Kunststoff-Folienmaterial (4) andere Stoffe aufgeschichtet werden.

10. Genadelter Teppich mit einer Trägerschicht (5), einer die Sichtseite des Teppichs bildenden, nadelfähige Fasern (9) aufweisenden Oberschicht (7) und einer dazwischen angeordneten, thermoplastisches Kunststoff-Folienmaterial (8) enthaltenden Zwischenschicht (6), wobei die drei Schichten (5, 6, 7) mittels mindestens der Oberschicht (7) entnommener Fasern (9) miteinander vernadelt sind, dadurch gekennzeichnet, daß die Zwischenschicht (6) durch stückiges, räumlich ausgebildetes, vernadeltes Kunststoff-Folienmaterial (8) gebildet ist und daß die vernadelten Fasern (9) in der Zwischenschicht (6) fest eingebunden sind.

11. Genadelter Teppich nach Anspruch 10, dadurch gekennzeichnet, daß die Zwischenschicht (6) mehrere Lagen von stückigem Kunststoff-Folienmaterial (8) aufweist.

12. Genadelter Teppich nach einem der Ansprüche 10 oder 11, dadurch gekennzeichnet, daß der aus Kunststoff-Folienstücken (8) bestehenden Zwischenschicht (6) Fasern, insbesondere natürliche oder synthetische Fasern beigemischt sind.

13. Genadelter Teppich nach einem der Ansprüche 10 oder 11, dadurch gekennzeichnet, daß der Zwischenschicht (6) Stücke aus zerkleinerten Bodenbelägen beigemischt sind.

## Claims

1. Method of manufacturing a needled carpet in which an intermediate layer (6) containing a thermoplastic synthetic resin film material (8) is arranged between a carrier layer (5) and an upper layer (7) containing fibres (9) capable of being needled, whereupon the three layers (5, 6, 7) are bound together to form a carpet by means of a needling process by fibres (9) taken through the upper layer (7), characterised in that three-dimensionally formed pieces of plastics film material (8) are employed as the intermediate layer (6) and the needled fibres are firmly bound into the intermediate layer (6) at least by the action of heat.

2. Method according to claim 1, characterised in that the intermediate layer (6) is compressed by the additional action of pressure.

3. Method according to claim 2, characterised in that the carpet is heated with at least partial softening of the pieces of the plastics film material (8) and is pressed between two rollers (3).

4. Method according to one of claims 1 to 3, characterised in that the three-dimensional un-needled pieces of plastics film material (8) which are used have a volume as deposited which is at least twice and at a maximum ten times as large as the volume of a flat plastics sheet material of the same mass.

5. Method according to claims 4, characterised in that as the three-dimensionally formed plastics sheet material (8), pieces of film having raised portions such as knobs, bubbles, deep-drawn parts or raised portions formed by stretching a number of local regions, in particular small local regions, are employed.

6. Method according to one of claims 1 to 5, characterised in that the pieces of plastics film material (8) originate from scrap film.

7. Method according to one of claims 1 to 6, characterised in that several layers of the pieces of plastics film material (8) are deposited as the intermediate layer (6).

8. Method according to claim 7, characterised in that other materials are added into the pieces of plastics film material (8) used as the intermediate layer (6).

9. Method according to claim 8, characterised in that other materials are laminated onto the plastics film material (4).

10. Needled carpet having a carrier layer (5), an upper layer (7) forming the visible side of the carpet and having fibres (9) capable of being needled and an intermediate layer (6) arranged between them and containing thermoplastic synthetic resin film material (8), the three layers (5, 6, 7) being needled together by means of fibres (9) taken at least from the upper layer (7), characterised in that the intermediate layer (6) is formed by three-dimensionally formed needled plastics film material (8) in pieces and that the needled fibres (9) are firmly bound into the intermediate layer (6).

11. Needled carpet according to claim 10, characterised in that the intermediate layer (6) has several layers of pieces of plastics of film material (8).

12. Needled carpet according to one of claims 10 or 11, characterised in that the intermediate layer (6) comprising pieces of plastics film (8) has fibres, in particular natural or synthetic fibres, added in.

13. Needled carpet according to one of claims 10 or 11, characterised in that the intermediate layer (6) has pieces of broken-down floor covering added in.

## Revendications

1. Méthode pour la fabrication d'un tapis aiguilleté, où une couche intermédiaire contenant une feuille en matière synthétique thermoplastique (8) est aménagée entre une couche porteuse (5) et une couche de recouvrement (7) comprenant des fibres aiguilleteurs (9), après quoi les trois couches (5, 6, 7) sont reliées pour former un tapis au moyen d'un procédé d'aiguilletage à l'aide des fibres (9) retirés de la couche de recouvrement (7), caractérisée en ce qu'une feuille en matière synthétique façonnée tridimensionnellement et fragmentée est utilisée en tant que la couche intermédiaire (6) et que les fibres aiguilletés sont liés solidement dans la couche intermédiaire (6) au moins par une influence thermique.

2. Méthode selon la revendication 1, caractérisée en ce que la couche intermédiaire (6) est comprimée par l'effet d'une pression supplémentaire.

3. Méthode selon la revendication 2, caractérisée en ce que le tapis est réchauffé et pressé entre deux rouleaux (3) sous l'effet d'un ramollissement partiel au moins de la matière de feuille synthétique fragmentée (8).

4. Méthode selon l'une des revendications 1 à 3, caractérisée en ce que la matière de feuille synthétique, formée tridimensionnellement, non aiguilletée, fragmentée (8) a un volume en vrac qui est au moins deux fois et au maximum dix fois le volume d'une matière de feuille synthétique plane ayant la même masse.

5. Méthode selon la revendication 4, caractérisée en ce que, des morceaux de feuille ayant des rehaussements, tels que des évidements, des nopes, des parties embouties ou des rehaussements provoqués par l'étirage d'une multitude de secteurs, plus particulièrement de petits secteurs sont utilisés en tant que matière de feuille formée tridimensionnellement.

6. Méthode selon l'une des revendications 1 à 5, caractérisée en ce que la matière de feuille synthétique (8) provient de déchets de feuille.

7. Méthode selon l'une des revendications 1 à 6, caractérisée en ce que plusieurs de couches de matière de feuille synthétiques fragmentée (8) sont posées en tant que couche intermédiaire (6).

8. Méthode selon la revendication 7, caractérisée en ce que d'autres matières sont ajoutées à la matière de feuille synthétique fragmentée (8) utilisée en tant que couche intermédiaire (6).

9. Méthode selon la revendication 8, caractérisée en ce que d'autres matières sont appliquées à la matière de feuille synthétique (4).

10. Tapis aiguilleté avec une couche porteuse (5), une couche de recouvrement contenant des fibres aiguilleteurs (9) constituant la face et une couche intermédiaire (6) contenant une matière de feuille synthétiques thermoplastique (8) aménagée entre les deux, les trois couches (5, 6, 7), étant aiguilletées au moyen de fibres (9) retirés au moins de la couche de recouvrement (7), caractérisé en ce que la couche intermédiaire (6) est constituée par une matière de feuille formée tridimensionnellement, fragmentée aiguilletée (8) et en ce que ces fibres aiguilletés (9) sont liés solidement dans la couche intermédiaire (6).

11. Tapis aiguilleté selon la revendication 10, caractérisé en ce que la couche intermédiaire (6) présente plusieurs couches de matière de feuille synthétique fragmentée 8).

12. Tapis aiguilleté selon l'une des revendications 10 ou 11, caractérisé en ce que, plus particulièrement, des fibres naturels ou synthétique sont ajoutés à la couche intermédiaire (6) constituée par des morceaux de matière de feuille (8).

13. Tapis aiguilleté selon l'une des revendications 10 ou 11, caractérisé en ce que des morceaux de recouvrement de sol fragmentés sont ajoutés à la couche intermédiaire (6).
